# EUROPEAN PATENT APPLICATION

(11) **EP 4 215 936 A1**
(43) Date of publication of application: **26.07.2023**
(21) Application number: 22153202.1
(22) Date of filing: 25.01.2022
(51) Int. Cl.: G01S 7/481, G01S 17/42, G01S 17/89

(54) **LIDAR SYSTEM**

(71) Applicant: Robert Bosch GmbH, 70442 Stuttgart (DE)
(72) Inventor: Barbosa, Pedro, 4650-707 Felgueiras (PT); Cerquido, Monica, 4905-130 Palme Barcelos (PT); Correia, Alexandre, 4560-779 Penafiel (PT)

(57) **Abstract**

The current invention relates to a LiDAR system (100) with an optical scanning unit (101), comprising:
- at least one transmitting/receiving unit (102) for transmitting and receiving laser signals;
- an optical scanning unit (101) to deflect laser signals of the at least one transmitting/receiving unit (102) into predefined scanning directions (D), wherein the optical scanning unit (101) is built as a prism (105) comprising at least one reflective surface (106),
and wherein the at least one optical scanning unit (102) is rotatable around a rotational axis (107) relative to the optical scanning unit (101) to deflect the laser signals of the at least one transmitting/receiving unit (102) into multiple predefined scanning directions (D).

## Description

The current invention relates to a LiDAR system, in particular to a LiDAR system with an optical scanning unit.

### State of the Art

LiDAR (Light Detection and Ranging) systems are used in a variety of multiple applications for object detection and distance determination. Scanning LiDAR systems use scanning devices in order to deflect the Laser signals of the LiDAR system in predefined scanning directions in order to scan different parts of the surrounding.

Thus, an objective of the current invention is to provide an improved LiDAR system with an optical scanning unit.

The objective is solved by the LiDAR system of the independent claim. Advantageous embodiments are the subject of the dependent claims.

According to an aspect of the invention, a LiDAR system with an optical scanning unit is provided, comprising:
at least one transmitting/receiving unit for transmitting and receiving laser signals;
an optical scanning unit to deflect laser signals of the at least one transmitting/receiving unit into predefined scanning directions, wherein the optical scanning unit is built as a prism comprising at least one reflective surface,
and wherein the at least one optical scanning unit is rotatable around a rotational axis relative to the optical scanning unit to deflect the laser signals of the at least one transmitting/receiving unit into multiple predefined scanning directions.

This can achieve the technical advantage of an improved LiDAR system with an optical scanning unit with a high angular resolution. The LiDAR system comprises an optical scanning unit and at least one transmitting/receiving unit. The transmitting/receiving unit is configured to transmit and receive laser signals. The optical scanning unit is configured to reflect the laser signals generated by the LiDAR system and transmitted by the transmitting unit into a predefined scanning direction. The optical scanning unit is further configured to reflect reflected laser signals coming from the predefined scanning direction to the respective transmitting/receiving unit. The optical scanning unit is configured as a prism with a least one reflective surface configured to reflect the laser signals from the transmitting/receiving unit into the predefined scanning direction and laser signals reflected from objects in the surrounding coming from the predefined scanning direction into the at least one transmitting/receiving unit. In order to be able to scan multiple scanning directions, the a least one transmitting/receiving unit is rotatable around a predefined rotational axis. By rotating the transmitting/receiving unit around the predefined rotational axis, an angle between the transmitting/receiving unit and the respective reflective surface of the optical scanning unit can be modified. By modification of the reflection angle of the laser signals transmitted by the transmitting/receiving unit and reflected by the reflective surface of the optical scanning unit, the laser signals can be reflected into a modified scanning direction. By continuously rotating the transmitting/receiving unit around the predefined rotational axis, a continuous scanning of the surrounding of the LiDAR system in continuous scanning directions can be achieved.

According to an embodiment, the prism has a pyramidical shape, wherein the at least one reflective surface is a sloped surface, and wherein the optical scanning unit is moveable along a translational axis.

This can achieve the technical advantage of a more precise scanning of the surrounding. By the slope of the reflective surface, the transmitted laser signals can be reflected in a vertical reflection angle by the reflective surface. By the rotation of the transmitting/receiving unit around the predefined rotational axis, a horizontal reflection angle can be modified and the transmitted laser signals can be reflected in different horizontal scanning directions. By the slope of the reflective surface, an additional vertical reflection angle can be introduced and therefore, a scanning of the surrounding and a reflection of the transmitted laser signals in a vertical direction can be achieved. By moving the pyramidical prism of the optical scanning unit along a translational direction, the vertical reflection angle of the transmitted laser signals reflected by the reflective surface is preserved. The vertical reflection angle is directly related to the slope of the reflective surface with regard to the vertical direction. By moving the pyramidical prism along the translational direction however a distance between the transmitting/receiving unit and the reflective surface can be modified. By the modification of the distance the length of a travel path of the transmitted/received light can also be modified. by modifying the travel path of the transmitted/received light leads a modification of the resolution of the LiDAR-System can be achieved.

According to an embodiment, the rotational axis and the translational direction are parallel, wherein the rotational axis runs through a center point and an apex of the pyramidical prism.

This can achieve the technical advantage of a further improved scanning process. With the parallel orientation of the rotational axis and the translational direction, a modification of the resolution of the LiDAR-System by translationally moving the optical scanning unit along the translational direction can be achieved by simultaneously holding the scanning direction constant. Analogously, the scanning direction can be modified by rotating the transmitting/receiving unit around the rotational axis without a simultaneous change of the resolution.

According to an embodiment, the prism has multiple reflective surfaces, wherein the LiDAR system has multiple transmitting/receiving units.

This can achieve the technical advantage of a further improved scanning process. By the multiple transmitting/receiving units and the multiple reflective surfaces of the prism of the optical scanning unit, multiple laser signals can be transmitted simultaneously into multiple predefined scanning directions. This allows a simultaneous scanning in multiple different predefined scanning directions. This allows a more complete scanning of the surrounding and a reduction in required scanning time.

According to an embodiment, the multiple transmitting receiving units are arranged around an optical scanning unit.

This can achieve the technical advantage of a 360° scanning of the surroundings. By arranging the multiple transmitting/receiving units around the optical scanning unit, a 360° scanning of the surroundings of the LiDAR system can be achieved with regard to the horizontal reflection angle.

According to an embodiment, the at least one or the multiple transmitting/receiving units are arranged on a ring-shaped power control board.

This can achieve the technical advantage of an easy to manufacture and a robust arrangement of the multiple transmitting/receiving units. Further, by placing the multiple transmitting/receiving units on a ring-shaped power control board, each of the multiple transmitting/receiving units can be rotated around the predefined rotational axis simultaneously by rotating the entire power control board around the predefined rotational axis. The predefined rotational axis is therefore oriented through a center point of the ring-shaped power control board.

According to an embodiment, the at least one reflective surface is provided with a high reflective coating.

This can achieve the technical advantage of an improved reflectivity of the reflective surfaces of the optical scanning unit. The higher reflectivity further leads to more powerful transmitted laser signals reflected into the predefined scanning directions, which leads to a more powerful LiDAR system and an improved signal-to-noise ratio of the received laser signals.

According to an embodiment, the LiDAR system further comprises an actuation unit configured to move the optical scanning unit along the translational direction.

This can achieve the technical advantage of a further improvement in the scanning process. This can be achieved by an actuation unit configured to translationally move the optical scanning unit along the translational direction in order to change the resolution.

According to an embodiment, the actuation unit is further configured to rotate the at least one transmitting/receiving unit around the rotational axis.

This can achieve the technical advantage of a further improved scanning process. For this, the actuation unit is further configured to also rotate the at least one transmitting/receiving unit around the rotational axis. This further allows for a reduction in required space as only one actuation unit is needed to move both the transmitting/receiver units as well as the optical scanning unit.

According to an embodiment, the actuation unit comprises a servo motor and/or an electro-pneumatic system and/or piezoelectric linear motor positioners and/or an ultrasonic motor linear actuator and/or an electromagnetic actuating unit, configured to rotate and translate the optical scanning unit via magnetic coupling.

This can achieve the technical advantage of a very precise and robust movement of the optical scanning unit and the transmitting/receiving units. By the precise movement of both the optical scanning unit and the transmitting/receiving units, a precise definition of the predefined scanning directions can be achieved, which leads to a more precise scanning process.

Embodiments of the invention are explained with reference to the following Figures. The Figures show:
- Fig. 1: a schematic diagram of a LiDAR system with an optical scanning unit; and
- Fig. 2: a schematic system architecture of the LiDAR system with an optical scanning unit.

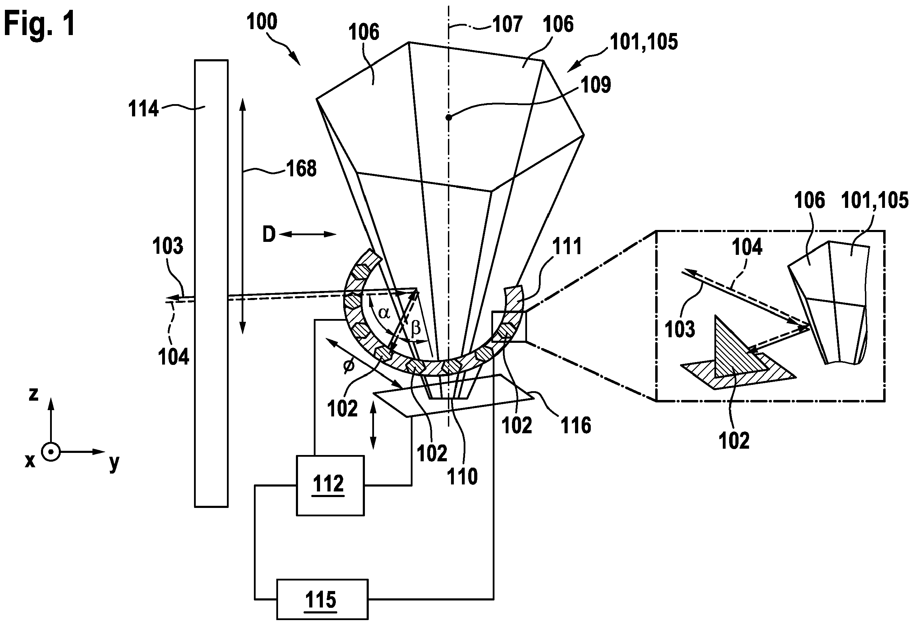

Fig. 1 shows a schematic diagram of a LiDAR system 100 with an optical scanning unit 101.

In the illustrated embodiment, the LiDAR system 100 comprises an optical scanning unit 101 and at least one transmitting/receiving unit 102. The at least one transmitting/receiving unit 102 is configured to transmit and receive laser signals. The at least one transmitting/receiving unit 102 is further configured to be rotated around a predefined rotational axis 107 around a predefined rotation angle Φ. The optical scanning unit 101 is constructed as a pyramidical prism 105 with at least one reflective surface 106. For scanning a surrounding of the LiDAR system 100, the at least one transmitting/receiving unit 102 transmits transmitted laser light 103 to the at least one reflective surface 106 of the pyramidical prism 105 of the optical scanning unit 101. The transmitted laser light 103 is reflected by the reflective surface 106 into a predefined scanning direction D. Further, laser light reflected from objects in the surrounding and coming from the predefined scanning direction D is reflected by the one reflective surface 106 of the pyramidical prism 105 of the optical scanning unit 101 into direction of the at least one transmitting/receiving unit 102 and is received by the respective transmitting/receiving unit 102.

In order to scan the surroundings of the LiDAR system 100 in different scanning directions D, a rotation of the at least one transmitting/receiving unit 102 around the predefined rotational axis 107 and around the optical scanning unit 101 is performed. By rotating the transmitting/receiving unit 102 around the rotational axis 107, a horizontal reflection angle α of the reflection of the transmitted laser light 103 reflected by the reflective surface 106 can be modified. By modifying the horizontal reflection angle a, the predefined scanning direction D can be modified with respect to a horizontal direction x, y.

In the illustrated embodiment, the prism 105 of the optical scanning unit 101 has a pyramidical shape and the at least one reflective surface 106 comprises a slope with regard to a vertical direction z. Further, the optical scanning unit 101 is translationally movable along a translational direction 108. By moving the optical scanning unit 101 along the translational direction 108, a vertical reflection angle β of the transmitted and received laser light 103, 104 reflected by the at least one reflective surface 106 is preserved. The vertical reflection angle β has a constant relation to the slope of the reflective surface with regard to the vertical axis z. But with the translational Movement of the optical scanning unit 101 along the translational direction 108 a distance between the transmitting/receiving unit 102 and the reflective surface 106 of the optical scanning unit 101 can be modified. This way the travel distance of the transmitted and received laser light 103, 104 can be modified. By modifying the travel distance of the transmitted and received laser light 103, 104 a resolution of the LiDAR-System 100 can be modified.

In the illustrated embodiment, the LiDAR system 100 comprises multiple transmitting/receiving units 102. The multiple transmitting/receiving units 102 are arranged on a ring-shaped power control board 111. This way, the multiple transmitting/receiving units 102 are arranged around the pyramidical prism 105 of the optical scanning unit 101. Further, the pyramidical prism 105 of the optical scanning unit 101 comprises multiple reflective surfaces 106. In the illustrated embodiment, the pyramidical prism 105 of the optical scanning unit 101 comprises six reflective surfaces 106. This, however, is not supposed to limit the current invention and the prism 105 can have a different number of reflective surfaces 106 and can further have a shape different from the pyramidical shape shown in this particular embodiment.

By the multiple reflective surfaces 106 and the multiple transmitting/receiving units 102 arranged around the pyramidical shaped prism 105 of the optical scanning unit 101, a simultaneous scanning of the surroundings in multiple different scanning directions D can be achieved. In the shown embodiment, only one scanning process by only one transmitting/receiving unit 102 is illustrated. This, however, is not meant to limit the current invention, but is only due to the readability of the illustrated Fig. 1.

In the illustrated embodiment, the rotational axis 107 runs through a center point 109 and an apex 110 of the pyramidical prism 105. Further, the translational direction 108 is oriented parallel to the rotational axis 107. In the shown embodiment, both the rotational axis 107 and the translational direction 108 are aligned parallel to the predefined vertical direction z.

In the shown embodiment, the pyramidical prism 105 of the optical scanning unit 101 is fixed to a support unit 116. In the shown embodiment, the pyramidical prism 105 is fixed at the support unit 116 with the apex 110 of the pyramidical prism 105. In the shown embodiment, the LiDAR system 100 further comprises an actuation unit 112. The actuation unit 112 is configured to move the optical scanning unit 101 along the translational direction 108. For this, the actuation unit 112 is actuationally connected to the support unit 116. In the shown embodiment, the actuation unit 112 is further configured to rotate the transmitting/receiving units 102 around the predefined rotational axis 107 in predefined rotation angles Φ. For this, in the shown embodiment, the actuation unit 112 is actuationally connected to the ring-shaped power control board 111 of the multiple transmitting/receiving units 102. Each of the multiple transmitting/receiving units 102 can therefore be rotated around the rotational axis 107 in identical predefined rotation angles Φ by a rotation of the ring-shaped power control board 111 of the multiple transmitting/receiving units 102.

In the shown embodiment, the LiDAR system 100 further comprises a control unit 115 configured to control the actuation unit 112 and therefore to control the movement of the optical scanning unit 101 and the rotation of the multiple transmitting/receiving units 102. The control unit 115 is further configured to control the transmitting and receiving process of the transmitted laser light 103 and the received laser light 104 by the multiple transmitting/receiving units 102. Therefore, in Fig. 1, the control unit 115 is connected to the ring-shaped power control board 111 of the transmitting/receiving units 102. By this connection, the control unit 115 is configured to control each of the transmitting/receiving units 102 to transmit laser signals and to further analyse the laser signals received by the multiple transmitting/receiving units 102.

In the shown embodiment, the LiDAR system 100 further comprises a protective window 114 configured to protect the LiDAR system 100 from the surroundings. The protective window 114 is transparent for the laser signals of the LiDAR system 100. In the shown embodiment, the protective window 114 is only shown for one particular scanning direction D. This, however, is not supposed to limit the current invention, alternatively, the protective window 114 or multiple protective windows 114 can be arranged in multiple scanning directions.

According to one embodiment, the at least one reflective surface 106 or the multiple reflective surfaces 106 of the optical scanning unit 101 can be provided with a high-reflective coating. By the coating of the reflective surfaces 106, a reflectivity of the respective reflective surface 106 of higher than 98% can be achieved.

In one embodiment, the multiple transmitting/receiving units 102 can be built as photo detectives.

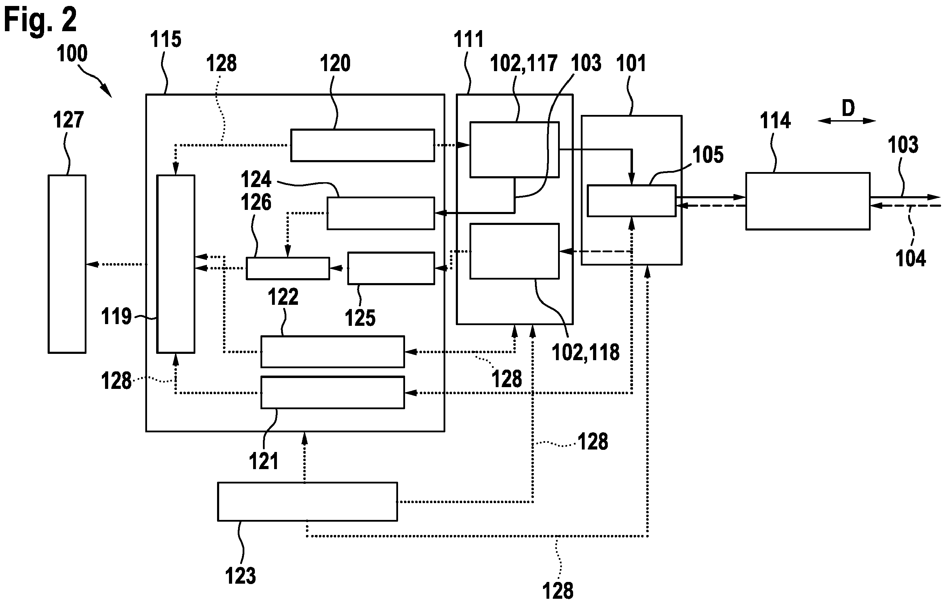

Fig. 2 shows a schematic system architecture of the LiDAR system 100 with an optical scanning unit 101.

Fig. 2 shows another embodiment of the LiDAR system 100 of Fig. 1. The LiDAR system 100 of Fig. 2 is based on the LiDAR system 100 of Fig. 1 and comprises all features shown in Fig. 1. These features and in particular the scanning process described in great detail with regard to Fig. 1 shall not be described in great detail in the following description.

The LiDAR system 100 comprises an optical scanning unit 101, formed as a pyramidical prism 105 with at least one reflective surface 106. The LiDAR system 100 further comprises at least one transmitting/receiving unit 102 arranged on a power control board 111. The transmitting/receiving unit 102 is rotatable around a rotational axis 107 around the optical scanning unit 101. In the shown embodiment, the transmitting/receiving unit 102 comprises a transmitting module 117 configured to transmit the laser signals of the LiDAR system 100 and a receiving module 118 configured to receive the laser signals reflected by objects in the surrounding.

In the shown embodiment, the LiDAR system 100 further comprises a control unit 115 configured to control the transmitting/receiving unit 102. In the shown embodiment, the control unit 115 comprises a processor 119, a laser interface 120, a prism interface 121, a power control board interface 122, a time start 124, a receiver 125 and a time stop 126. Via the laser interface 120, the processor 119 controls the transmitting module 117 of the transmitting/receiving unit 102 to transmit laser signals 103 to the optical scanning unit 101 in order to transmit the laser signals 103 in the predefined scanning direction D. Laser signals 103 are further transmitted by the transmitting module 117 to the time start 124.

The time start 124 starts a time count of the transmitted laser light 103, to start the time-of-flight measurement of the LiDAR system 100.The transmitting module 117 therefore transmits one light pulse to the optical scanning unit 101 and one light pulse to the time start 124 simultaneously.

Reflected laser light 104, reflected by objects in the surroundings and coming from the predefined scanning direction D is reflected by the optical scanning unit 101 to the receiving module 118 of the transmitting/receiving unit 102. The receiving module 118 therefore transmits electrical signals 128 to the receiver 125.

The receiver 125 analyses the received light pulse 104 reflected by the object in the scanning direction D and transmits a respective receiving signal to the time stop 126. The time stop 126 therefore is configured to compare the time signal of the time start 124, representing the time of the transmission of the laser signal 103, and the receiving signal of the receiver 125, representing the receiving time of the received laser signal 104. By this, a time-of-flight of the transmitted laser signal 103 reflected by the object in the scanning direction D can be achieved.

Via the prism interface 121, the processor 119 further controls the pyramidical prism 105 of the optical scanning unit 101 in order to move the optical scanning unit 101 along the translational direction 108. Via the pcb interface 122, the processor 119 further controls the rotation of the multiple transmitting/receiving units 102 around the predefined rotational axis 107. Further, the processor 119 is configured to control each of the transmitting/receiving units 102 to transmit laser signals 103 in a predefined time interval via the power control board interface 122. In the shown embodiment, the LiDAR system 100 further comprises a power pcb 123. Via the power pcb, a power supply for the actuation unit, not shown in Fig. 2, for the rotation of the multiple transmitting/receiving units 102 around the rotational axis 107 and the translational movements of the optical scanning unit 101 along the translational direction 108 and for transmitting and receiving of the laser light 103, 104 by the multiple transmitting/receiving units 102 can be provided. The power supply is further controlled by the processor 119 of the control unit 115.

After the data analysis of the scanning process based on the transmitted laser signals 103 and the received laser signals 104 by the processor 119, the processor 119 outputs a point cloud 127. The point cloud 127 is a representation of the surroundings of the LiDAR system 100, wherein each of the points of the point cloud 127 resembles a reflection point of the transmitted laser light 103 reflected back to the LiDAR system 100.

In one embodiment of the invention, the control unit 115 can be configured as a field programmable gate array.

## Claims

1. LiDAR system (100) with an optical scanning unit (101), comprising:
- at least one transmitting/receiving unit (102) for transmitting and receiving laser signals;
- an optical scanning unit (101) to deflect laser signals of the at least one transmitting/receiving unit (102) into predefined scanning directions (D), wherein the optical scanning unit (101) is built as a prism (105) comprising at least one reflective surface (106),
and wherein the at least one optical scanning unit (101) is rotatable around a rotational axis (107) relative to the optical scanning unit (101) to deflect the laser signals of the at least one transmitting/receiving unit (102) into multiple predefined scanning directions (D).

2. LiDAR system (100) of claim 1, wherein the prism (105) has a pyramidical shape, wherein the at least one reflective surface (106) is a sloped surface, and wherein the optical scanning unit (102) is moveable along a translational direction (108).

3. LiDAR system (100) of claim 2, wherein the rotational axis (107) and the translational direction (108) are parallel, and wherein the rotational axis (107) runs through a center point (109) and an apex (110) of the pyramidical prism (105).

4. LiDAR system (100) of any of the previous claims, wherein the prism (105) has multiple reflective surfaces (106), wherein the LiDAR system has multiple transmitting/receiving units (102).

5. LiDAR system (100) of claim 4, wherein the multiple transmitting/receiving units (102) are arranged around the optical scanning unit (101).

6. LiDAR system (100) of any of the previous claims, wherein the at least one or the multiple transmitting/receiving units (102) are arranged on a ring-shaped power control board (111).

7. LiDAR system (100) of any of the previous claims, wherein the at least one reflective surface (106) is provided with a high reflective coating.

8. LiDAR system (100) of any of the previous claims, further comprising an actuation unit (112) configured to move the optical scanning unit (101) along the translational direction (108).

9. LiDAR system (100) of claim 7, wherein the actuation unit (112) is further configured to rotate the at least one or the multiple transmitting/receiving units (102) around the rotational axis (107).

10. LiDAR system (100) of claim 8 or 9, wherein the actuation unit (112) comprises a servo motor and/or an electro-pneumatic system and /or piezoelectric linear motor positioners and/or an ultrasonic motor linear actuator and/or an electromagnetic actuating unit, configured to rotate and translate the optical scanning unit via magnetic coupling.

## Amended claims

### Amended claims in accordance with Rule 137(2) EPC.

1. LiDAR system (100) with an optical scanning unit (101), comprising:
- at least one transmitting/receiving unit (102) for transmitting and receiving laser signals;
- an optical scanning unit (101) to deflect laser signals of the at least one transmitting/receiving unit (102) into predefined scanning directions (D), wherein the optical scanning unit (101) is built as a prism (105) comprising at least one reflective surface (106),
wherein the at least one transmitting/receiving unit (102) is rotatable around a rotational axis (107) relative to the optical scanning unit (101) to deflect the laser signals of the at least one transmitting/receiving unit (102) into multiple predefined scanning directions (D)
, wherein the prism (105) has a pyramidical shape, wherein the at least one reflective surface (106) is a sloped surface, and wherein the optical scanning unit (102) is moveable along a translational direction (108), wherein the rotational axis (107) and the translational direction (108) are parallel, and wherein the rotational axis (107) runs through a center point (109) and an apex (110) of the pyramidically shaped prism (105), and wherein by translating the optical scanning unit (102) along the translational direction (108) a resolution of the LiDAR-System (100) with regard to the translational direction is modifiable.

2. LiDAR system (100) of claim 1, wherein the prism (105) has multiple reflective surfaces (106), wherein the LiDAR system has multiple transmitting/receiving units (102).

3. LiDAR system (100) of claim 2, wherein the multiple transmitting/receiving units (102) are arranged around the optical scanning unit (101).

4. LiDAR system (100) of any of the previous claims, wherein the at least one or the multiple transmitting/receiving units (102) are arranged on a ringshaped power control board (111).

5. LiDAR system (100) of any of the previous claims, wherein the at least one reflective surface (106) is provided with a high reflective coating.

6. LiDAR system (100) of any of the previous claims, further comprising an actuation unit (112) configured to move the optical scanning unit (101) along the translational direction (108).

7. LiDAR system (100) of claim 6, wherein the actuation unit (112) is further configured to rotate the at least one or the multiple transmitting/receiving units (102) around the rotational axis (107).

8. LiDAR system (100) of claim 6 or 7, wherein the actuation unit (112) comprises a servo motor and/or an electro-pneumatic system and /or piezoelectric linear motor positioners and/or an ultrasonic motor linear actuator.
